(19) Europäisches Patentamt
European Patent Office
Office européen des brevets

(11) **EP 1 324 209 B1**

(12) **EUROPEAN PATENT SPECIFICATION**

(45) Date of publication and mention
of the grant of the patent:
**02.03.2011 Bulletin 2011/09**

(51) Int Cl.:
***G06F 15/16*** *(2006.01)*     ***G06T 1/20*** *(2006.01)*

(21) Application number: **01972530.8**

(22) Date of filing: **27.09.2001**

(86) International application number:
**PCT/JP2001/008434**

(87) International publication number:
**WO 2002/027513 (04.04.2002 Gazette 2002/12)**

(54) **MULTIPROCESSOR SYSTEM, DATA PROCESSING SYSTEM, DATA PROCESSING METHOD, AND COMPUTER PROGRAM**

MULTIPROZESSORSYSTEM, DATENVERARBEITUNGSSYSTEM, DATENVERARBEITUNGSVERFAHREN UND RECHNERPROGRAMM

SYSTEME MULTIPROCESSEURS, SYSTEME DE TRAITEMENT DE DONNEES, PROCEDE DE TRAITEMENT DE DONNEES ET PROGRAMME D'ORDINATEUR

(84) Designated Contracting States:
**AT BE CH CY DE DK ES FI FR GB GR IE IT LI LU MC NL PT SE TR**

(30) Priority: **27.09.2000 JP 2000294732**
**21.09.2001 JP 2001289588**

(43) Date of publication of application:
**02.07.2003 Bulletin 2003/27**

(73) Proprietor: **Sony Computer Entertainment Inc.**
**Tokyo 107-0052 (JP)**

(72) Inventor: **SASAKI, Nobuo,**
**SONY COMPUTER ENTERTAINMENT INC.**
**Tokyo 107-0052 (JP)**

(74) Representative: **Manitz, Finsterwald & Partner GbR**
**Martin-Greif-Strasse 1**
**80336 München (DE)**

(56) References cited:
**EP-A2- 0 360 527**    **EP-A2- 0 411 497**
**JP-A- 2 047 757**    **JP-A- 7 084 966**
**JP-A- 61 283 976**

- **"MESSAGE BROADCAST MECHANISM USING A SHARED BUS" IBM TECHNICAL DISCLOSURE BULLETIN, IBM CORP. NEW YORK, US, vol. 33, no. 1A, 1 June 1990 (1990-06-01), page 184/185, XP000120147 ISSN: 0018-8689**
- **SCHNEIDER ET AL: "M-BUFFER: A FLEXIBLE MISD ARCHITECTURE FOR ADVANCED GRAPHICS" COMPUT. & GRAPHICS, vol. 19, no. 2, 1995, pages 239-246, XP004011801**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a data processing system that performs data processing by a plurality of data processing means, for example, a multi-processor system, and to a data processing method, and in particular to a multi-processor system and a data processing method of the kind as defined in the preamble of claim 1 and 9, respectively.

Background Art

With the advance in a highly sophisticated information-oriented society, amounts of data processing to be performed by data processing apparatus such as computers tend to increase. Moreover, data processing procedures have become complicated and highly developed. Conventionally, performance of processors such as CPUs (Central Processing Units) is improved or a plurality of processors are arranged as a multi-processor so as to improve the processing capabilities of the entire data processing apparatus.

However, in recent years, the required speed of improvements in data processing has reached the point that exceeds the speed of improvements in performance of processors. The improvements in performance of processors cannot be attained in a short period of time due to long development cycles.

On the other hand, data processing capabilities of, for example, multi-processors are determined depending on the number of processors to be used and the way of processing. Improvements in performance of individual processors are thus less important. For this reason, this is one of useful means to improve the processing capabilities of data processing apparatus.

The way of data processing by a multi-processor can be classified as follows, based on the range of data required for a single processor during data processing.

(1) The processor that performs data processing uses only the data processed by the adjacent processor(s) to which it is connected.

Such control is suitable for cell automata, image filters, computation of motion of cloth or waves, computation to generate a polygon from a curved surface and the like.

(2) The processor that performs data processing uses the data processed by all processors.

Such control is suitable for associative memories, optimization of, for example, a four-color problem and a traveling salesman problem, radiosity, clustering, multi-link simulation, learning, etc.

(3) The processor that performs data processing uses only the data processed by some of a plurality of processors.

Such control is suitable for self-assembly computation, group algorithms based on a visual decision, many-to-many collision detection, database searches, computation to generate/deform a continuous curved surface, born animation, inverse kinematics, etc.

In the above case (1), the data processing can be implemented efficiently by the conventional parallel processors. However, in the above cases (2) and (3), the processing speed of the entire system is limited by the communication speed between the parallel processors, so that the performance of each processor cannot be achieved. For example, a crossbar connection between all processors makes it possible to perform high-speed data processing in the cases (2) and (3). This approach, however, is not practical due to a huge amount of hardware involved.

EP-A2-0 411 497 discloses a data transmission method for a multi-computer system comprising a plurality of computers which are connected via a transmission line. The transmission method is laid out to allow communication by content codes indicating the content of data to be incorporated in a system using communication only by destination addresses and group addresses. The multi-computer system comprises three kinds of computers. Each of the first computers includes a processing function for data having content codes and is laid out to transmit data messages having a content code. Each of the second computers includes a processing function for data messages having destination addresses and is laid out to transmit data messages having destination address or broadcasting data message. Each of the third computers includes both a processing function for data having content codes and a processing function for data messages having destination addresses together with a delivering function for distributing data messages to the two processing functions, and is laid out to transmit data messages having a content code, data messages having destination address, and broadcasting data messages, respectively, depending on the processing function. The plurality of computers is divided into two groups, with a first group comprising the first computers and the third computers, and the second group comprising the second computers and the third computers. A group address is assigned to each group. Each of the data messages having a content code includes a group address associated with the first group and a content code. Each of the data messages having destination addresses includes a destination address for addressing a respective computer of the second group. Each of the broadcasting data messages includes a group address associated with the second group. Each of the group addresses and destination addresses comprises an address type part and an address part. The address type is used to determine whether a respective address is a group address or a destination address. Each of the first and third computers includes a content table, wherein codes for indicating contents of data which can be processed by the processing function for data messages having content codes are registered beforehand. The broadcasting data messages differ from the data messages having destination addresses in that the destination address is replaced by the group address associated with the second group. Consequently, a respective broadcasting data message is received by each of the second computers and third computers associated with said second group.

An object of the present invention is to provide a multi-processor system and a data processing method of the above-referenced kind having improved capabilities.

Disclosure of Invention

In order to solve the aforementioned problems, the present invention as defined in the claims provides a multi-processor system described below and a data processing method.

A multi-processor system comprises a plurality of processors that perform data processing and a controller for broadcasting broadcast data to the plurality of processors, the broadcast data including the data used in data processing, wherein each of the plurality of processors performs data processing after sorting out only the data necessary for the data processing that it performs, from the broadcast data broadcasted by the controller.

In such multi-processor systems, each processor performs data processing after sorting out only the data that it needs, from the broadcasted data, so that it is possible to implement high-speed processing without any conflict of data.

Each processor is allowed to use or refer to results of processing from other processors, and the controller is configured to obtain the results of data processing from a plurality processors, and broadcast to all processors the obtained results of processing as the broadcast data.

Preferably, each of the plurality of processors is assigned identification data for identifying itself, and the controller is configured to generate and broadcast the broadcast data, the broadcast data including the identification data of the sending processors in addition to the results of the processing. Based on the identification data, each processor can easily sort out the result(s) of processing necessary for the data processing that it performs at the subsequent timing. The identification data also allow each processor to easily find which processor has sent the broadcasted result(s) of processing.

When there is a possibility of conflict among the plurality of processors that have finished the data processing, the multi-processor system is configured with the addition of a sort mechanism that obtains the identification data from the processor that has finished data processing among the plurality of processors and sends the obtained identification data to the controller in a predetermined order. The controller is configured to obtain the results of processing based on the identification data received from the sort mechanism. In this case, there is further provided means for generating priority data that is used to determine an order of reading the results of processing by the controller. It is configured that the processor that has finished data processing sends, to the sort mechanism, the priority data about the processing along with its own identification data. The sort mechanism is configured to determine an order of sending the identification data, based on the priority data.

For example, when the processing order is given for the entirety of a multi-processor system, the sort mechanism allows the controller to obtain the results of processing in a necessary order and efficiently execute complicated processing in the whole system.

The sort mechanism includes registers of the same number as the processors, means for recording the priority data and the identification data that have sent from the sending processors, in the registers associated with the sending processors, and a comparator for comparing the priority data to determine the order of the identification data recorded in the respective registers. The sort mechanism is configured to determine an order of sending the identification data, based on the result of comparison obtained by the comparator.

The controller in the multi-processor system includes, for example, a memory for storing data, storage control means for obtaining the result(s) of processing from the processor that is specified by the identification data that have been received from the sort mechanism to store the obtained result(s) in the memory, and data generating means that reads the result(s) of processing stored in the memory and generates the broadcast data, the broadcast data including the result(s) of processing and the received identification data, whereby allowing the implementation of the multi-processor system.

More specifically, each processor includes a data processing mechanism for determining whether the data necessary for data processing that it performs are included in the broadcast data and performing the data processing after sorting out only the necessary data if any, means for sending to the controller the result of data processing the data processing mechanism has done along with its own identification data in response to a request from the controller, and means for sending process end notifying data to the sort mechanism in response to the completion of the data processing, the process end notifying data including its own identification data, whereby allowing the implementation of the multi-processor system.

The multi-processor system may comprise a sum circuit for calculating the sum of the results of data processing performed by the plurality of processors. Each of the plurality of processors sends the results of processing to the sum circuit. The sum circuit calculates the sum of the results of processing sent from the respective processors and sends the calculation result to the controller. The controller broadcasts the sum of the results of processing received from the sum circuit, to the plurality of processors.

The sum of the results of data processing is often required for normalization calculations in, for example, neuro-optimization. The calculated sum may be broadcasted to the individual processors. Thus, the multi-processor system configured in the above-mentioned manner can perform the processing at a high speed.

The above-mentioned multi-processor system may be configured so that at least some of the plurality of processors are connected to each other in a ring topology via a shared memory and data are transmitted and received between the processors connected in the ring topology through the shared memory.

The data processing method provided by the present invention is a method which is executed by such an apparatus or a system that includes a plurality of data processing means and includes control means for controlling operations of each of the plurality of data processing means, each of the data processing means performing data processing, the method comprising the steps of obtaining, by the control means, results of data processing in a predetermined order from the processors that have completed the data processing to generate broadcast data and to broadcast the broadcast data to the plurality of data processing means, the broadcast data including the obtained results of processing and the identification data for identifying the sending data processing means; and performing, by at least one of the plurality of data processing means, data processing after selecting only those results of processing specified according to the identification data included in the broadcast data, from the broadcast data received from the control means to send, to the control means, the result of processing along with the identification data indicating itself.

Brief Description of Drawings

FIG. 1 is a view illustrating a configuration example of a multi-processor system to which the present invention is applied;

FIG. 2 is a view illustrating a configuration example of a BCMC according to the present invention;

FIG. 3 is a view illustrating a configuration example of a cell processor according to the present invention;

FIG. 4 is a view illustrating a configuration example of a WTA/sum circuit according to the present invention;

FIG. 5 is a flowchart illustrating a flow of processing that is executed by the multi-processor system according to the present embodiment;

FIG. 6 is a conceptual view of how results of data processing of adjacent processors are used according to the present invention;

FIG. 7 is a conceptual view of how results of data processing of some processors are used according to the present invention;

FIG. 8 is a view illustrating an example where lattice point data according to the present invention are grouped;

FIG. 9 is a view illustrating an example where objects according to the present invention are divided into clusters; and

FIG. 10 is a flowchart illustrating a flow of processing of a collision detection algorithm according to the present invention.

Best Mode for Carrying Out the Invention

Embodiments of the present invention will be specifically described with reference to the drawings accompanying herewith.

The following describes an embodiment in which the present invention is applied to a multi-processor system that is an example of a data processing system.

<Entire Configuration>

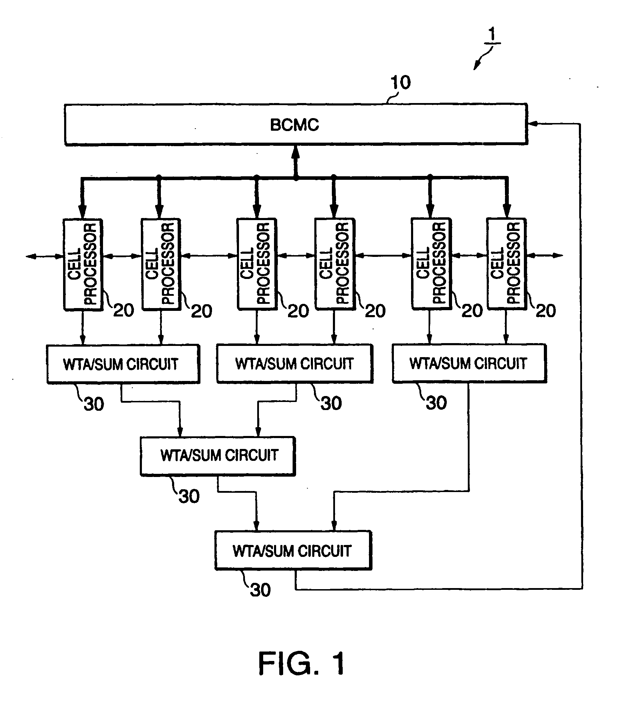

FIG. 1 is a view illustrating a configuration example of a multi-processor system. This multi-processor system 1 includes a broadcast memory controller (hereinafter, referred to as BCMC) 10 which is control means for processing, recording and reading data, a plurality of cell processors 20 each of which is an example of data processing means, a plurality of WTA (Winner Take All)/sum circuits 30 for achieving various kinds of functions required for data processing.

The BCMC 10 is connected to all cell processors 20 via a broadcast channel (a communication channel through which information can be disseminated to several recipients simultaneously).

This multi-processor system 1 manages in the BCMC 10 a state variable value that is an example of a result of data processing obtained by a cell processor 20. It also broadcasts the state variable values of all cell processors 20 from the BCMC 10 as an example of reference numeric values. This makes it possible for each cell processor 20 to refer to the state variable values generated by other cell processors 20 at a high speed.

The broadcast channel is a transmission path between the BCMC 10 and the plurality of cell processors 20, and includes an address bus that is used to transfer addresses and a data bus that is used to transfer data such as the state variable values. The address includes a cell address for specifying each cell processor 20 and a broadcast address for all cell processors 20.

The cell address corresponds to an address (physical address or logical address) on a memory, and the state variable value sent from the cell processor 20 is designed to be placed into the memory at an address corresponding to a cell address indicative of each cell processor 20. Each cell processor 20 is assigned an ID (identification) as identification information for identifying it. The cell address also corresponds to the ID. The cell address makes it possible to specify which cell processor 20 has sent the state variable value.

The WTA/sum circuits 30 are connected as illustrated in FIG. 1. More specifically, the WTA/sum circuits 30 are connected to have a pyramidal shape with the side of the cell processors 20 located at the first stage. The input terminals of each WTA/sum circuit 30 at the first stage are connected to two cell processors 20 while the output terminal thereof is connected to an input terminal of a WTA/sum circuits 30 at the second stage.

At the second stage and later, the input terminals are connected to the output terminal of each of two WTA/sum circuits 30 at the next lower stage while each output terminal is connected to an input terminal of a WTA/sum circuits 30 at the next upper stage. As to the WTA/sum circuit 30 at the uppermost stage, the input terminals thereof are connected to the output terminal of each of two WTA/sum circuits 30 at the next lower stage while the output terminal thereof is connected to the BCMC 10.

In addition to the connections illustrated in the figure, the present invention can be carried out by cascading the WTA/sum circuits 30. In this case, the input terminals of each WTA/sum circuit 30 at the first stage are connected to two cell processors 20 while the output terminal thereof is connected to an input terminal at the next upper stage. The input terminals of each WTA/sum circuit 30 at the second stage and later are connected to an output terminal of a WTA/sum circuit 30 at the next lower stage and a cell processor while the output terminal thereof is connected to an input terminal at the next upper stage. As to the WTA/sum circuit 30 at the uppermost stage, the input terminals thereof are connected to an output terminal of a WTA circuit 30 at the lower stage and a cell processor 20 while the output terminal thereof is connected to the BCMC 10.

Next, each of the BCMC 10, the cell processors 20, and the WTA/sum circuits 30 are described in detail.

<BCMC>

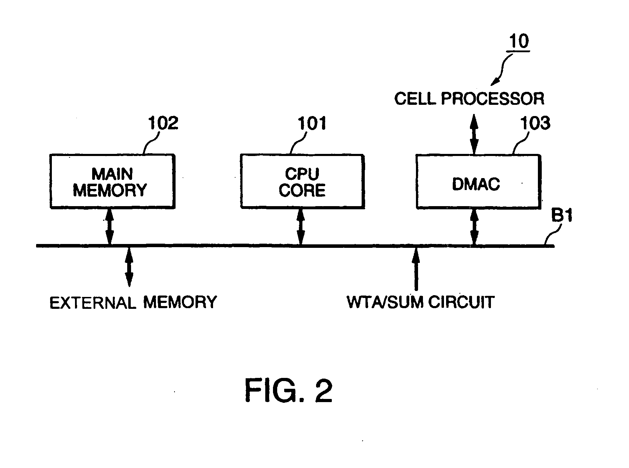

The BCMC 10 broadcasts data to all cell processors 20 through the broadcast channel, and fetches and holds the state variable values from the cell processors 20. A configuration example of the BCMC 10 is illustrated in FIG. 2.

The BCMC 10 includes a CPU core 101 that controls the entire operations of the multi-processor system 1, a re-writable main memory 102 such as an SRAM (Static Random Access Memory), and a DMAC (Direct Memory Access Controller) 103, all of which are connected to one another by a bus B1. The CPU core 101 is a semiconductor device to be mounted on a computer, which reads and executes a predetermined program in cooperation with the main memory 102 to provide a function for performing the characteristic data processing of the present invention.. The main memory 102 is used as a shared memory for the entire system.

The bus B1 is connected to an output terminal of the WTA/sum circuit 30 at the uppermost stage and to external memories such as hard disks and transportable media.

The CPU core 101 loads a boot program from the external memory on startup, and executes the boot program to invoke an operating system. It also reads various kinds of data necessary for data processing from the external memory and expands them to the main memory 102. Data such as state variable values of the cell processors 20 are to be stored in the main memory 102. The state variable value is placed into the main memory at the address corresponding to the cell address of the cell processor 20 that has calculated its own state variable value.

The CPU core 101 generates broadcast data to be broadcasted to each cell processor 20, based on the data read from the main memory 102. The broadcast data are a pair of data that include, for example, a state variable value and a cell address indicating the cell processor 20 that has calculated that state variable value. In this case, one or a plurality of pairs of data are generated.

The DMAC 103 is a semiconductor device that performs direct memory access transfer control between the main memory 102 and each cell processor 20. For example, the DMAC 103 broadcasts the broadcast data to the cell processors 20 via the broadcast channel. It obtains a result of data processing individually from each cell processor 20 and writes the results to the main memory 102.

<Cell Processor>

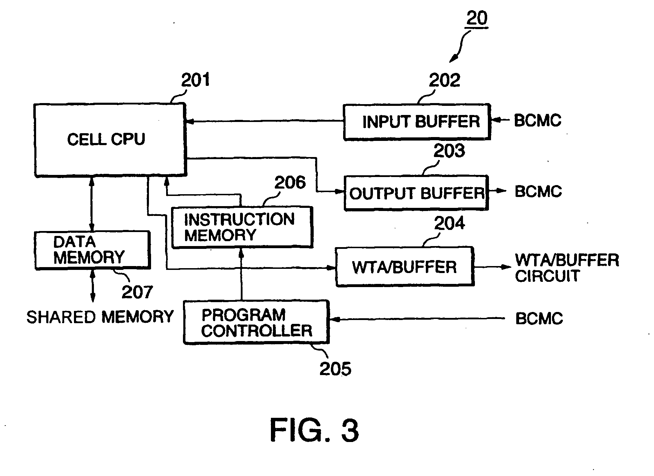

Each cell processor 20 performs data processing after sorting out necessary data from the broadcast data, and informs, at the time of completion of the data processing, the WTA/sum circuit 30 of the completion. Each cell processor 20 sends the state variable value which is the result of data processing to the BCMC 10 in response to an instruction from the BCMC 10. The cell processors 20 are connected to each other in a ring topology via a shared memory (not shown). The cell processors 20 may synchronously perform their data processing. Alternatively, the cell processors 20 may asynchronously perform their data processing. FIG. 3 shows a configuration example of the cell processor 20.

The cell processor 20 comprises a cell CPU 201, an input buffer 202, an output buffer 203, a WTA buffer 204, a program controller 205, an instruction memory 206, and a data memory 207.

The cell CPU 201 is a processor that has a programmable floating-point calculator and controls operations of the local cell processor 20 to perform data processing. The cell CPU 201 obtains the broadcast data subjected to broadcasting from the BCMC 10 via the input buffer 202. Then, the cell CPU 201 determines, based on the cell address of the paired data, whether the obtained broadcast data are those necessary for the processing that the cell CPU 201 should perform. The cell CPU 201 writes the state variable value to the corresponding address of the data memory 207, if necessary. Moreover, the cell CPU 201 reads the state variable value from the data memory 207 and performs data processing. Then, the cell CPU 201 writes a result of data processing to the output buffer 203, and sends data, which indicate completion of the data processing, to the WTA/sum circuit 30.

The input buffer 202 is for holding the broadcast data subjected to broadcasting from the BCMC 10. The broadcast data held are sent to the cell CPU 201 in response to a request from the cell CPU 201.

The output buffer 203 is for holding the state variable value of the cell CPU 201. The state variable value held is sent to the BCMC 10 in response to a request from the BCMC 10.

In addition to the above, the input buffer 202 and the output buffer 203 may transmit and receive data for control.

The WTA buffer 204 receives data which indicate completion of the data processing from the cell CPU 201 at the completion of the data processing performed by the cell CPU 201. Then, the WTA buffer 204 transmits the received data to the WTA/sum circuit 30 to inform the WTA/sum circuit 30 of the completion of the data processing. The data indicative of the completion of the data processing include, for example, the ID of the local cell processor 20 and priority data that are used to determine the priority. The priority data are necessary when the state variable value in the output buffer 203 is read out to the BCMC 10.

The program controller 205 is for fetching from the BCMC 10 a program that defines the operation of the cell processor 20. The program that defines the operation of the cell processor 20 includes a program for data processing that is carried out by the cell processor 20 and a data selection program for determining data necessary for processing that is carried out by that cell processor 20. The program also includes a priority determination program for determining the priority which is necessary when a result of processing is read out to the BCMC 10.

The instruction memory 206 is for storing the program(s) fetched by the program controller 205. The stored program is read to the cell CPU 201 as required.

The data memory 207 is for storing data to be processed by the cell processor 20. The broadcast data determined to be necessary by the cell CPU 201 are written thereto. The broadcast data are stored in the data memory 207 at the address corresponding to the cell address.

Furthermore, according to this embodiment, a part of the data memory 207 is connected to a cell processor 20 that is adjacent thereto via the shared memory. This makes it possible to transmit and receive data to and from the adjacent cell processor 20 for each cycle.

<WTA/sum Circuit>

The plurality of WTA/sum circuits 30 each determines an order in which the BCMC 10 captures the state variable values from the cell processors 20, based on the data indicative of the completion of data processing sent from each cell processor 20, and reports it to the BCMC 10.

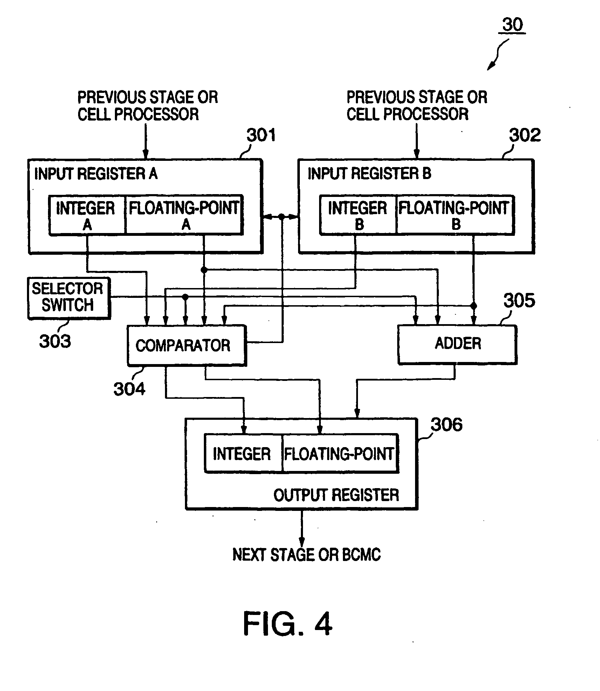

FIG. 4 illustrates a configuration example of the WTA/sum circuit 30.

Each WTA/sum circuit 30 comprises two input registers A and B (hereinafter, referred to as a first input register 301 and a second input register 302), a selector switch 303, a comparator 304, an adder 305, and an output register 306.

Each of the first input register 301 and the second input register 302 has an integer register and a floating-point register. Among the data sent from each cell processor 20 indicating completion of data processing, the ID is written to the integer register for example, and the priority data are written to the floating-point register.

The selector switch 303 activates either the comparator 304 or the adder 305. More specifically, the selector switch 303 enables only one of them in accordance with an operation mode. The operation mode is determined by an instruction from, for example, the BCMC 10. The operation mode will be described later.

The comparator 304 compares the floating-point values which are held by the floating-point registers of the first input register 301 and the second input register 302. The comparator 304 writes the larger (or smaller) value and its associated integer to the output register 306.

The adder 305 calculates the sum of the floating-point values which are held by the floating-point registers of the first input register 301 and the second input register 302, and writes the result of calculation to the output register 306.

The output register 306 is configured in a substantially same way as the first input register 301 and the second input register 302. Namely, the output register 306 comprises the integer register and the floating-point register. The ID is written to the integer register and the priority data are written to the floating-point register.

The WTA/sum circuit 30 has three operation modes as set forth below.

Maximum value (WTA) mode:

The comparator 304 is activated by the selector switch 303. The comparator 304 compares the floating-point values A and B which are held by the floating-point registers of the first input register 301 and the second input register 302. The comparator 304 writes the larger (or smaller) value and its associated integer to the output register 306. Upon completion of writing to the output register 306, the first input register 301 and the second input register 302 are cleared. The content of the output register 306 is written to the input register of the WTA/sum circuit 30 at the next upper stage. At this time, if the input register as a writing destination is not cleared, the writing is stalled and no writing is performed at this cycle. For this reason, the content of the output register 306 is to be written at the next cycle.

Addition mode:

The adder 305 is activated by the selector switch 303. The adder 305 calculates a sum of the floating-point values A and B which are held by the floating-point registers of the first input register 301 and the second input register 302. Then, the adder 305 writes the result of calculation to the output register 306. The content of the output register 306 is written to the input register of the WTA/sum circuit 30 at the next upper stage.

Approximate sort mode:

The comparator 304 is activated by the selector switch 303. The comparator 304 compares the floating-point values A and B which are held by the floating-point registers of the first input register 301 and the second input register 302. The comparator 304 writes the larger (or smaller) value and its associated integer to the output register 306.

Thereafter, only the input register that holds the value written to the output register 306 is cleared. The content of the output register 306 is written to the input register of the WTA/sum circuit 30 at the next upper stage. If the input register as a writing destination is not cleared, the writing is stalled and no writing is performed at this cycle. Note that the writing operation from the output register 306 of the WTA/sum circuit 30 at the next lower stage is performed.

By the approximate sort mode, the data the BCMC 10 receives from the WTA/sum circuit 30 at the uppermost stage are sorted in the increasing or decreasing order of the floating-point values.

Additionally, the first input registers 301, the second input registers 302, and the output registers 306 of all WTA/sum circuits 30 are cleared before initiation of each mode.

Changing the modes makes the plurality of WTA/sum circuits 30 function as a mechanism for sorting (sort mechanism) and/or a sum circuit, as a whole. In other words, the operation in the approximate sort mode realizes the sorting mechanism, and the operation in the addition mode realizes the sum circuit.

The WTA/sum circuit 30 that operates in each of the maximum value mode and the approximate sort mode may be realized as follows:

Namely, WTA/sum circuit 30 comprises input registers of the same number as the cell processors 20 in addition to a selector switch, a comparator, an adder, and an output register.

The input registers of the same number as the cell processors 20 are provided. Each input register includes an integer register and a floating-point register, as in the first register 301 and the second register 302. The comparator compares the floating-point values which are held by the floating-point registers of all input registers. The adder calculates a sum of the floating-point values which are held by all floating-point registers. The output register is the same as the output register of the WTA/sum 30 in FIG. 4.

The comparator compares the priority data that are held by the floating-point registers of the respective input registers and writes sequentially the associated IDs to the output register in the decreasing order of priority. This makes it possible to send the IDs to the BCMC 10 in the decreasing order of priority.

The adder adds the data that are held by the floating-point registers to obtain a total sum.

Such WTA/sum circuit alone serves as the sorting mechanism and the sum circuit of the present invention, without any connections as illustrated in FIG. 1.

<Data Processing Method>

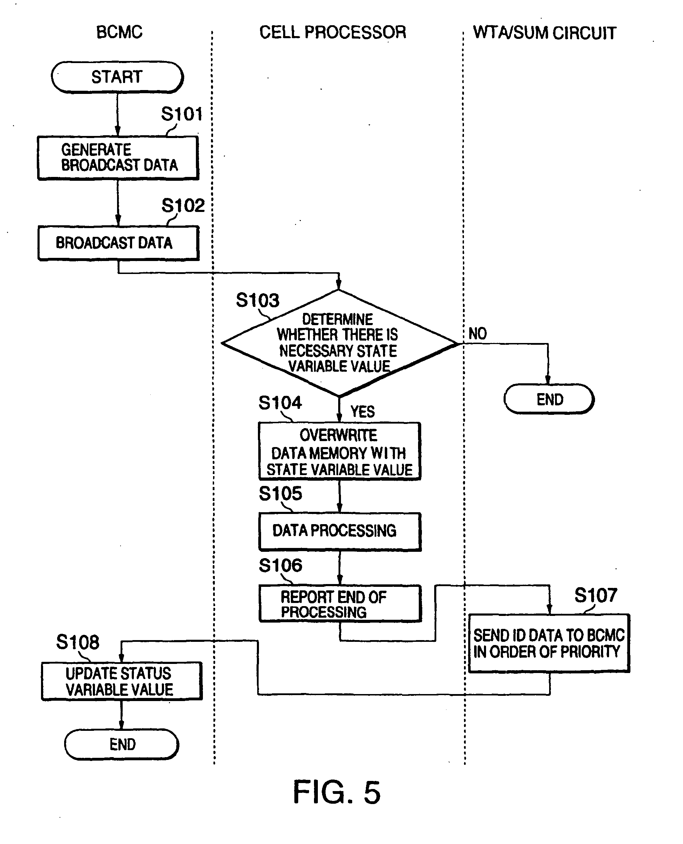

The multi-processor system 1 of the present embodiment performs the following operation to execute a required data processing. FIG. 5 is a flowchart illustrating a flow of processing that is executed by this multi-processor system 1.

In the main memory 102 of the BCMC 10, initial values of state variable values of all cell processors 20 are stored in advance.

The BCMC 10 produces broadcast data using a pair of data including a state variable value of a given cell processor 20 and a cell address of that cell processor 20 (step S101). Then, the BCMC 10 broadcasts the produced broadcast data to all cell processors 20 (step S102).

Each cell processor 20 fetches the broadcast data to the input buffer 202. The cell CPU 201 finds out the cell address of the broadcast data held by the input buffer 202 by using a data selection program stored in the instruction memory 206, and determines whether there is a state variable value that is required for the data processing to be carried out by the local cell processor 20 (step S103). When there is no state variable value that is required for the data processing to be carried out by the local cell processor 20, the cell processor 20 completes the processing operation (step S103: NO). When there is a state variable value that is required for the data processing to be carried out by the local cell processor 20 (step S103:YES), the cell processor 20 overwrites the address on the data memory 207 corresponding to the cell address paired with this state variable value, with the corresponding state variable value (step S104).

In this way, broadcasting of the data from BCMC 10 to each cell processor 20 is completed.

When the broadcasting is completed, each cell processor 20 carries out data processing of the state variable value recorded on the data memory 207 to produce a new state variable value by using the data processing program stored in the instruction memory 206. The new state variable value is written to the data memory 207, and is also written to the output buffer 203 (step S105). Then, each cell processor 20 overwrites the address on the data memory 207 corresponding to its cell address, with the new state variable value.

When the data processing is completed, the cell CPU 201 transmits end data that include an ID and priority data to the input register of the WTA/sum circuit 30 at the first stage via the WTA buffer 204 to inform the completion of the data processing (step S106). The priority data are generated according to a given priority determination program before or after the data processing.

In connection with the end data sent from the cell processors 20, the WTA/sum circuit 30 at the first stage holds an ID in the integer register of the input register and the priority data in the floating-point register. In this event, the WTA/sum circuit 30 operates in the approximate sort mode. To this end, the selector switch 303 activates the comparator 304.

The integer registers of the first input register 301 and the second input register 302 of the WTA/sum circuit 30 hold IDs sent from different cell processors 20. Each of the floating-point registers holds the priority data associated with the ID. The comparator 304 reads the priority data from the floating-point registers of the first input register 301 and the second input register 302, and compares them. As a result of the comparison, the comparator 304 writes the data of the higher priority and their corresponding IDs to the floating-point register and the integer register, respectively, of the output register 306. The input registers whose contents are written to the output register 306 are cleared. The IDs and the priority data written to the output register 306 are written to the input registers of the WTA/sum circuit 30 at the next upper stage.

The aforementioned processing is performed at each stage by the WTA/sum circuits. The WTA/sum circuit 30 at the uppermost stage sends to the BCMC 10 the ID that is written to the integer register of the output register 306.

The WTA/sum circuits 30 as a whole send the IDs to the BCMC 10 in the decreasing order of priority by the aforementioned processing (step S107).

The BCMC 10 obtains a state variable value that has already been subjected to data processing, from the output buffer 203 of the cell processor 20 corresponding to the ID sent from the WTA/sum circuit 30. The address corresponding to the cell address that indicates the cell processor 20 that has performed the processing is overwritten with the obtained state variable value (step S108).

In this way, one cycle of operation for processing the state variable value is completed.

The BCMC 10 obtains the result of data processing from each cell processor 20, thus generating broadcast data.

Each cell processor 20 performs data processing after sorting out only the data that it requires, from the broadcast data. Processing with the broadcast data allows data processing using the data processed by all other cell processors 20. Moreover, the BCMC 10 generates the broadcast data from the pair of data that include the result of data processing sent from each cell processor 20 and the cell address indicative of the cell processor 20 that has generated the result of data processing. This makes it possible to perform processing by using only the result of data processing sent from the specific cell processor(s) 20. Moreover, since the adjacent cell processors 20 are connected to each other via the shared memory, it is possible to perform processing between the adjacent cell processors 20, as in the prior art.

Each cell processor 20 sorts out necessary data from the broadcast data instead of directly fetching the data that it requires from the main memory 102. The cell processor 20 performs processing while holding the data locally, so that high-speed processing can be made without any conflict of data.

[First Embodiment]

A first embodiment of the above-mentioned multi-processor system 1 is described specifically.

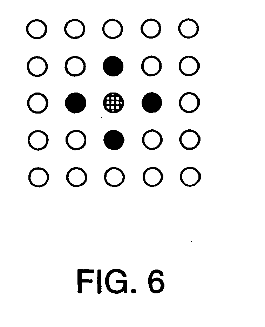

In this embodiment, an example is described with reference to FIG. 6, where only the data processed by a certain cell processor 20 and by the cell processors 20 that are adjacent thereto are used.

In FIG. 6, a white circle represents a cell processor, a shaded circle indicates a cell processor that performs data processing, and a black circle denotes a cell processor that holds necessary data.

It is assumed that the following filter calculation is continuously executed with respect to the data (lattice point data) about each lattice point of n x n lattices (n is a natural number of two or more):

$$Xi,j = (Xi\text{-}1,j + Xi\text{+}1,j + Xi,j\text{-}1 + Xi,j\text{+}1)/4$$

where i: the row number of a lattice point, j: the column number of a lattice point.

BCMC 10 groups the lattice point data on rows or on columns as broadcast data and broadcasts them to the n cell processors 20.

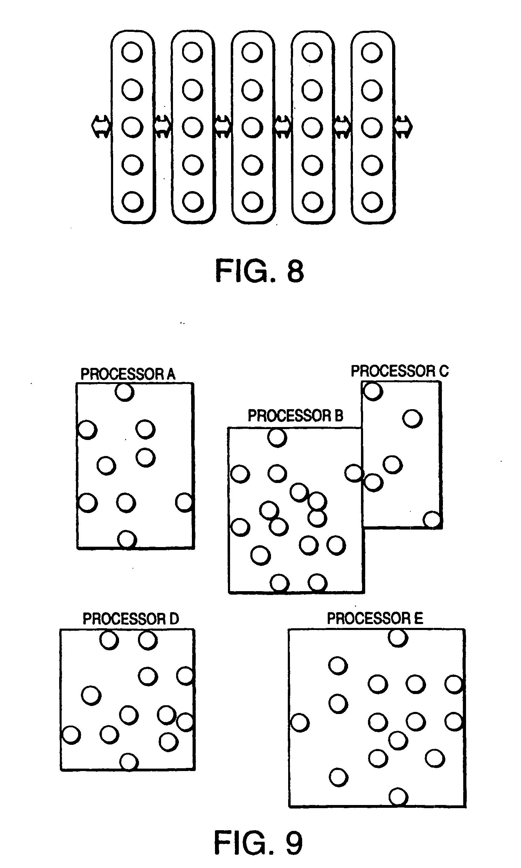

FIG. 8 is a view illustrating lattice point data which are grouped, in which five lattice point data represented by the white circle are gathered per group. The lattice point data in one group are processed by a single cell processor 20.

The cell processor 20 stores a necessary group of lattice point data of the broadcast data in the data memory 207. Then, it reads the lattice point data sequentially out of the data memory 207 and performs data processing.

Data transfer between the cell processors 20 connected via the shared memory is performed using the shared memory. Let the operation of writing data to the shared memory be considered as one cycle, then transfer of grouped data between the cell processors 20 can be carried out in 2n cycles.

The cell processors 20 synchronously operate to simultaneously perform writing to the shared memory and calculations, as in pipeline processing, allowing communication between the cell processors 20 and the calculations at the same time.

The BCMC 10 broadcasts the subsequent broadcast data each time the data processing of grouped lattice data is completed. The cell processor 20 uses i and j of the data broadcasted to determine whether it requires those data.

Grouping the broadcast data makes it possible to process the data in a row or column direction, and data transfer via the shared data allows data processing in a row or column direction.

[Second Embodiment]

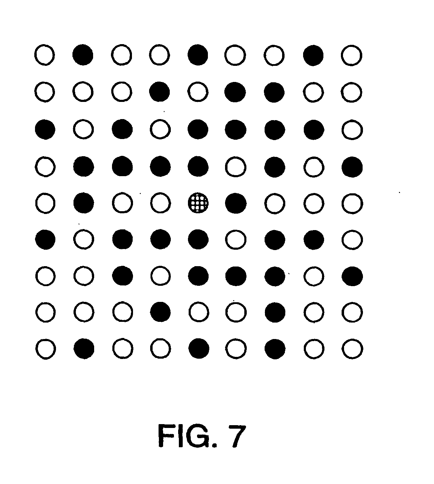

This embodiment describes with reference to FIG. 7 an example where only the data processed by some cell processors 20 are used. In FIG. 7, a white circle represents a cell processor, a shaded circle indicates a cell processor that performs data processing, and a black circle denotes a cell processor that holds necessary data. Such a multi-processor system is useful to realize a Hopfield associative storage.

It is assumed that each cell processor 20 holds a state variable value, which is a result of data processing, and a weighting factor that indicates the significance of the state variable data. Moreover, each cell processor 20 bears a number and the BCMC 10 fetches the state variable values from all cell processors 20 in order of numbers.

The BCMC 10 broadcasts as the broadcast data the state variable values fetched from all cell processors 20. Each cell processor 20 selects only the necessary state variable value(s) from the broadcast data. Then, it performs product-sum operation with respect to the weighting factor and updates the state variable value. In the case where all state variable values that are included in the broadcast data are necessary, the processing is the one that uses the data processed by all processors.

[Third Embodiment]

Next, an example of pattern matching calculation processing is described.

Here, performed is processing for specifying the cell processor 20 that holds such data that are most similar to a feature of the input data. This processing is carried out as follows:

Each cell processor 20 holds beforehand template data to be compared.

The BCMC 10 broadcasts the input data to all cell processors 20. Each cell processor 20 calculates a differential value between a feature of the template data that it holds and a feature of the input data. The differential value is sent to the WTA/sum circuit 30 along with the ID.

The WTA/sum circuit 30 operates in the maximum value mode. The integer register of the input register holds the ID, and the floating-point register thereof holds the differential value. The comparator 304 compares the differential values calculated by the cell processors 20, and sends the smaller differential value and its associated ID to the output register 306. This processing is carried out through the entire WTA/sum circuits 30 to obtain the smallest differential value and its associated ID. The obtained ID and the differential value are sent to the BCMC 10.

The BCMC 10 specifies the cell processor 20 based on the ID. This makes it possible to detect the template data which are most similar to the feature of the input data, and to detect the differential value between the most similar template data and the input data.

[Fourth Embodiment]

An example of processing based on an algorithm for detecting the collision of moving objects, which is used in image processing is described. "Collision detection algorithm" is an algorithm that determines whether n objects existing in a certain space are colliding with other objects and determines how much force is generated by a collision, if any.

It is assumed that there are some variations in the spatial distribution of n objects and that the objects are divided into m clusters. For example, it is determined herein which one of (n-1) objects collides with a given object most strongly.

FIG. 9 is a view illustrating objects in such a space, in which objects represented by a white circle are enclosed within a rectangle to form one cluster. In FIG. 9, the objects are divided into five clusters. The data indicative of the objects are broadcasted from the BCMC 10, and fetched to the cell processors 20 on a cluster-by-cluster basis. The cell processor 20 performs processing about a position and movement in the space in connection with the objects included in one fetched cluster.

In the example of FIG. 9, cell processors A to E perform processing about the objects divided into the five clusters.

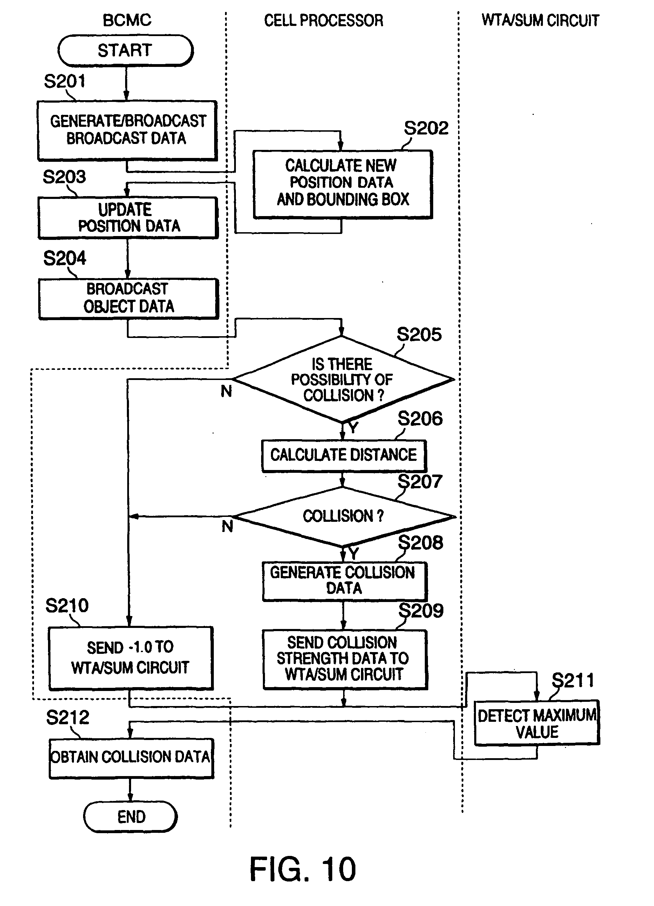

A flow of the processing for the collision detection algorithm is described with reference to FIG. 10.

The BCMC 10 generates broadcast data that include object data and cluster data, the object data having data about a position and velocity of an object while the cluster data indicating a cluster to which the corresponding object belongs. The BCMC 10 then broadcasts them to all cell processors 20 (step S201). Each cell processor 20 sorts out and fetches object data from the broadcast data based on the cluster data.

The cell processor 20 that has fetched the object data calculates new position data after a unit time from the data about a current position and velocity of the object. The cell processor 20 obtains a value of a new bounding box from the new position data (step S202). The bounding box means, for example, a rectangle that encloses the objects as in FIG. 9. Values of the bounding box are, for example, coordinates of the vertexes of the bounding box.

The BCMC 10 fetches the new position data of the objects from each cell processor 20 and updates the position data (step S203).

Next, the BCMC 10 broadcasts the object data including the obtained new position data and so on, to all cell processors 20 one by one (step S204). Namely, the BCMC 10 sends the position data which indicate a position of one object that serves as a target to be subjected to collision detection (hereinafter, referred to as an "object to be detected"), to all cell processors 20.

Using the bounding box calculated by step S202, each cell processor 20 first determines whether there is a possibility that collision of the object to be detected will occur (step S205). More specifically, the cell processor 20 determines whether the object to be detected is located within the bounding box.

In the case where there is a possibility that collision of the object to be detected will occur, that is, the object to be detected is located within the bounding box (step S205: YES), the cell processor 20 calculates sequentially the distance between the object to be detected and other objects in the bounding box that are to be processed by that cell processor (step S206) and determines whether collision will occur (step S207). In the case where the object to be detected collides with other object(s) in the bounding box (step S207: YES), the cell processor 20 generates collision data that include data (collision strength data) quantitatively indicating the strength of impact which is caused by the collision, and include data indicating an influence upon the object to be detected by the collision (step S208). Moreover, the cell processor 20 sends the collision strength data among the generated collision data to the WTA/sum circuit 30 together with its ID (step S209).

When the object to be detected is located out of the bounding box (step S205: NO), or when the object to be detected is decided not to collide with any object as a result of the calculation of distance (step S207: NO), each cell processor 20 sends, for example, "-1.0" as the collision strength data to the WTA/sum circuit 30 (step S210).

The WTA/sum circuit 30 operates in the maximum value mode. The WTA/sum circuit 30 compares the collision strength data sent from the cell processors 20, and determines the collision strength data that indicate the highest strength of impact caused by collision (step S211). Then, the WTA/sum circuit 30 specifies the cell processor 20 that has generated the collision strength data in question. After that, the WTA/sum circuit 30 sends the ID which indicates the specified cell processor 20, to the BCMC 10.

The BCMC 10 obtains the collision data from the cell processor 20 which is designated by the ID sent from the WTA/sum circuit 30 at the uppermost stage (step S212). By the processing of and after the step 204 on all objects, collision among all objects in the space is determined.

[Fifth Embodiment]

Next, an example of a case where an adder 305 of the WTA/sum circuit 30 is used is described.

The cell processors 20 each supplies the result of data processing to the WTA/sum circuit 30. In the WTA/sum circuit 30, the adder 305 adds up the results of data processing and obtains the sum of the results of data processing from all cell processors 20. In this way, the sum of the results of data processing can be obtained at a high speed by the WTA/sum circuit 30.

The sum of the results of data processing is sent to the BCMC 10and, in turn, transmitted to all cell processors 20 at a high speed. The sum of the results of data processing is used for normalization calculations in, for example, neuro-optimization.

In the above description, the BCMC 10 and the WTA/sum circuit 30 are independent of each other but the WTA/sum circuit 30 may be incorporated into the BCMC 10 as a single block to configure a controller.

It should be noted that the above examples have thus been described in conjunction with the cases where the data processing means is the cell processors 20 and the controlling means is the controller (BCMC 10). However, the configuration components of the present invention are not limited to those described in the above examples.

For example, the following configuration may be applied. Two or more data processing terminals are connected to each other in such a manner that two-way communications can be provided via a wide-area network. Among these data processing terminals, one or a plurality of data processing terminals are operated as the control means and the remaining ones are operated as the data processing means. The control means is provided with a function of broadcasting broadcast data that include the results of data processing received from some or all of the plurality of data processing means and include the data to be used for data processing executed by at least one data processing means. Each of the plurality of data processing means is provided with a function of performing the data processing after sorting out only the data necessary for the data processing that it performs, from the broadcast data broadcasted by the control means. It also has a function of transmitting the result of processing to the control means.

Alternatively, the following configuration may be applied. A plurality of general-purpose data processing terminals that are capable of specifying predetermined identification information (for example, the aforementioned identification data) are used as a plurality of data processing means. Then, a data processing system may be configured by only a server that is capable of performing two-way communications with these general-purpose data processing terminals, or by an apparatus provided with a semiconductor device having a CPU and memory therein.

Regarding the server or the apparatus of this case, the CPU provided inside of it loads and executes a given computer program. This provides the following functions to the server main body or the apparatus. One function is to specify at least one data processing terminal as the data processing means and generate broadcast data that include identification information of the specified data processing terminal(s) and include data processing data directed to the data processing terminal. Another function is to obtain from some or all of the plurality of data processing terminals the results of data processing that have been executed by those data processing terminals. Still another function is to add the received results of processing to the broadcast data and broadcast the broadcast data to each of the plurality of data processing terminals.

The above-mentioned present invention makes it possible to efficiently perform data processing among data processing means in the case where a plurality of data processing means are used.

**Claims**

1. A multi-processor system (1) comprising:

a plurality of processors(20) that perform data processing; and
a controller (10) adapted to broadcast broadcast data to said plurality of processors (20), the broadcast data including the data used in data processing
**characterized in that**
each of said plurality of processors (20) is adapted to perform data processing after sorting out only the data necessary for the data processing that it performs, from said broadcast data broadcasted by said controller (10);
said controller (10) is adapted to obtain a result of processing from the processor (20) that has finished data processing, and broadcast to all processors (20) the obtained results of processing as said broadcast data;
each of said plurality of processors (20) is assigned identification data for identifying itself;
said controller (10) is adapted to generate and broadcast the broadcast data, the broadcast data including the identification data of the sending processors (20) in addition to said results of the processing;
said plurality of processors (20) is adapted to sort out the result(s) of processing necessary for the data processing that they perform at the subsequent timing, based on said identification data included in the received broadcast data; and
said multi-processor system further comprises a sort mechanism (30) that is adapted to obtain the identification data from the processor (20) that has finished data processing among said plurality of processors (20) and send the obtained identification data to said controller (10) in a predetermined order, wherein
said controller (10) is configured to obtain said results of processing based on the identification data received from said sort mechanism (30).

2. The multi-processor system according to claim 1, further comprising means for generating priority data, the priority data being used to determine an order of reading said results of processing by said controller (10), wherein
the processor (20) that has finished data processing sends, to said sort mechanism (30), said priority data about the processing along with its own identification data, and
said sort mechanism (30) is configured to determine an order of sending said identification data, based on said priority data.

3. The multi-processor system according to claim 2, wherein said sort mechanism (30) includes registers (301, 302, 306) of the same number as said processors (20),
means (301, 302) for recording said priority data and said identification data that have sent from the sending processors (20), in said registers associated with the sending processors (20), and
a comparator (304) for comparing said priority data to determine the order of the identification data recorded in the respective registers (301, 302),
said sort mechanism (30) being configured to determine an order of sending said identification data, based on the result of comparison obtained by said comparator (304).

4. The multi-processor system according to claim 1, wherein said controller (10) includes a memory (102) for storing data, storage control means (101) for obtaining said result(s) of processing from the processor (20) that is specified by the identification data that have been received from said sort mechanism (30) to store the obtained result(s) in said memory (102), and
data generating means (101) that reads said processing result(s) stored in said memory (102) and generates said broadcast data, the broadcast data including said processing result(s) and the received identification data.

5. The multi-processor system according to claim 1, wherein each processor (20) includes a data processing mechanism (201) for determining whether the data necessary for data processing that it performs are included in said broadcast data and performing the data processing after sorting out only said necessary data if any,
means for sending to said controller (10) the result of the data processing said data processing mechanism (201) has done along with its own identification data in response to a request from said controller (10), and
means for sending process end notifying data to said sort mechanism (30) in response to the completion of the data processing, the process end notifying data including its own identification data.

6. The multi-processor system according to claim 1 comprising:

a sum circuit (30) for calculating the sum of the results of data processing performed by said plurality of processors (20), wherein
each of said plurality of processors (20) sends a result of processing to said sum circuit (30),
said sum circuit (30) calculates the sum of the results of processing sent from the respective processors (20) and sends the calculation result to said controller (10), and
said controller (10) broadcasts the sum of the results of processing received from said sum circuit (30), to said plurality of processors (20).

7. The multi-processor system according to claim 1, wherein at least some of said plurality of processors (20) are connected to each other in a ring topology via a shared memory (102) and data are transmitted and received between the processors (20) connected in the ring topology through said shared memory (102).

8. The multi-processor system according to claim 6, wherein at least some of said plurality of processors (20) are connected to each other in a ring topology via a shared memory (102) and data are transmitted and received between the processors (20) connected in the ring topology through said shared memory (102).

9. A data processing method which is executed by such a system (1) that includes a plurality of processors (20) and includes a controller (10) for controlling operations of each of said plurality of processors (20), each of the processors (20) performing data processing,
**characterized in that**
said method comprises the steps of:

obtaining, by said controller (10), data processing results in a predetermined order from the processors (20) that have completed the data processing to generate broadcast data and to broadcast the broadcast data to said plurality of processors (20), the broadcast data including the obtained processing results and the identification data for identifying the sending processors (20);

performing, by at least one of the plurality of processors (20), data processing after selecting only those processing results specified according to the identification data included in the broadcast data, from the broadcast data received from the controller (10) to send, to said controller (10), the processing result along with the identification data indicating itself;

assigning to each of said plurality of processors (20) identification data for identifying themselves;

adapting said controller (10) to generate and broadcast the broadcast data, the broadcast data including the identification data of the sending processors (20) in addition to said results of the processing;

sorting out, by said plurality of processors (20), the result(s) of processing necessary for the data processing that they perform at the subsequent timing, based on said identification data included in the received broadcast data; and

obtaining, by a sort mechanism (30), the identification data from the processors (20) that has finished data processing among said plurality of processor (20) and sending, by said sort mechanism (30), the obtained identification data to said controller (10) in a predetermined order; and

configuring said controller (10) to obtain said results of processing based on the identification data received from said sort mechanism (30).

**Patentansprüche**

1. Multiprozessorsystem (1), umfassend:

mehrere Prozessoren (20), die eine Datenverarbeitung durchführen; und

einen Controller (10), der geeignet ist, um Rundsendungsdaten an die mehreren Prozessoren (20) rundzusenden, wobei die Rundsendungsdaten die in der Datenverarbeitung verwendeten Daten umfassen;

**dadurch gekennzeichnet, dass**

jeder der mehreren Prozessoren (20) geeignet ist, um nach dem Aussortieren nur der Daten, die für die Datenverarbeitung, die er durchführt, notwendig sind, aus den durch den Controller (10) rundgesendeten Rundsendungsdaten eine Datenverarbeitung durchzuführen;

der Controller (10) geeignet ist, um ein Ergebnis der Verarbeitung von dem Prozessor (20) zu erhalten, der die Datenverarbeitung abgeschlossen hat, und die erhaltenen Ergebnisse der Verarbeitung an alle Prozessoren (20) als Rundsendungsdaten rundzusenden;

jedem der mehreren Prozessoren (20) Identifikationsdaten, um sich selbst zu identifizieren, zugeordnet sind;

der Controller (10) geeignet ist, um die Rundsendungsdaten zu erzeugen und rundzusenden, wobei die Rundsendungsdaten zusätzlich zu den Ergebnissen der Verarbeitung die Identifikationsdaten des sendenden Prozessors (20) umfassen;

die mehreren Prozessoren (20) geeignet sind, um auf der Grundlage der Identifikationsdaten, die in den empfangenen Rundsendungsdaten umfasst sind, das Ergebnis/die Ergebnisse der Verarbeitung, das/ die für die Datenverarbeitung notwendig ist/ sind, die sie im nachfolgenden Zeitablauf durchführen, auszusortieren; und

das Multiprozessorsystem ferner einen Sortierungsmechanismus (30) umfasst, der geeignet ist, um die Identifikationsdaten von dem Prozessor (20) unter den mehreren Prozessoren (20), der die Datenverarbeitung abgeschlossen hat, zu erhalten und die erhaltenen Identifikationsdaten in einer vorbestimmten Reihenfolge an den Controller (10) zu senden, wobei

der Controller (10) ausgestaltet ist, um die Ergebnisse der Verarbeitung auf der Grundlage der Identifikationsdaten, die von dem Sortierungsmechanismus (30) empfangen werden, zu erhalten.

2. Multiprozessorsystem nach Anspruch 1,
ferner umfassend ein Mittel zum Erzeugen von Prioritätsdaten, wobei die Prioritätsdaten verwendet werden, um eine Reihenfolge des Lesens der Ergebnisse der Verarbeitung durch den Controller (10) zu ermitteln, wobei
der Prozessor (20), der die Datenverarbeitung abgeschlossen hat, die Prioritätsdaten über die Verarbeitung zusammen mit seinen eigenen Identifikationsdaten an den Sortierungsmechanismus (30) sendet, und

der Sortierungsmechanismus (30) zum Ermitteln einer Reihenfolge des Sendens der Identifikationsdaten auf der Grundlage der Prioritätsdaten ausgestaltet ist.

3. Multiprozessorsystem nach Anspruch 2,
wobei der Sortierungsmechanismus (30) umfasst:

Register (301, 302, 306) der gleichen Anzahl wie die Prozessoren (20),
ein Mittel (301, 302) zum Aufzeichnen der Prioritätsdaten und der Identifikationsdaten, die von den sendenden Prozessoren (20) gesendet wurden, in den den sendenden Prozessoren (20) zugehörigen Registern, und
einen Komparator (304) zum Vergleichen der Prioritätsdaten zum Ermitteln der Reihenfolge der in den jeweiligen Registern (301, 302) aufgezeichneten Identifikationsdaten,
wobei der Sortierungsmechanismus (30) ausgestaltet ist, um eine Reihenfolge des Sendens der Identifikationsdaten auf der Grundlage des durch den Komparator (304) erhaltenen Ergebnisses des Vergleichs zu ermitteln.

4. Multiprozessorsystem nach Anspruch 1, wobei der Controller (10) umfasst:

einen Speicher (102) zum Speichern von Daten, ein Speichersteuermittel (101) zum Erhalten des Ergebnisses/der Ergebnisse der Verarbeitung von dem Prozessor (20), der durch die Identifikationsdaten spezifiziert ist, die von dem Sortierungsmechanismus (30) empfangen wurden, um das erhaltene Ergebnis/die erhaltenen Ergebnisse in dem Speicher (102) zu speichern, und
ein Datenerzeugungsmittel (101), das das/die in dem Speicher (102) gespeicherte(n) Verarbeitungsergebnis (se) liest und die Rundsendungsdaten erzeugt, wobei die Rundsendungsdaten das Verarbeitungsergebnis/die Verarbeitungsergebnisse und die empfangenen Identifikationsdaten umfassen.

5. Multiprozessorsystem nach Anspruch 1, wobei jeder Prozessor (20) umfasst:

einen Datenverarbeitungsmechanismus (201) zum Ermitteln, ob die Daten, die für die Datenverarbeitung notwendig sind, die er durchführt, in den Rundsendungsdaten umfasst sind, und Durchführen der Datenverarbeitung nach dem Aussortieren nur der notwendigen Daten, falls vorhanden,
ein Mittel zum Senden des Ergebnisses der Datenverarbeitung, die der Datenverarbeitungsmechanismus (201) ausgeführt hat, zusammen mit seinen eigenen Identifikationsdaten in Ansprechen auf eine Anforderung von dem Controller (10) an den Controller (10), und
ein Mittel zum Senden von Prozessendebenachrichtigungsdaten an den Sortierungsmechanismus (30) in Ansprechen auf die Beendigung der Datenverarbeitung, wobei die Prozessendebenachrichtigungsdaten seine eigenen Identifikationsdaten umfassen.

6. Multiprozessorsystem nach Anspruch 1, umfassend:

einen Summierungsschaltkreis (30) zum Berechnen der Summe der Ergebnisse der Datenverarbeitung, die durch die mehreren Prozessoren (20) durchgeführt wird, wobei
jeder der mehreren Prozessoren (20) ein Ergebnis der Verarbeitung an den Summierungsschaltkreis (30) sendet,
der Summierungsschaltkreis (30) die Summe der Ergebnisse der Verarbeitung, die von den jeweiligen Prozessoren (20) gesendet werden, berechnet und das Berechnungsergebnis an den Controller (10) sendet, und
der Controller (10) die Summe der Ergebnisse der Verarbeitung, die von dem Summierungsschaltkreis (30) empfangen wird, an die mehreren Prozessoren (20) rundsendet.

7. Multiprozessorsystem nach Anspruch 1,
wobei mindestens einige der mehreren Prozessoren (20) in einer Ringtopologie über einen gemeinsam genutzten Speicher (102) miteinander verbunden sind und Daten zwischen den Prozessoren (20), die in der Ringtopologie über den gemeinsam genutzten Speicher (102) verbunden sind, gesendet und empfangen werden.

8. Multiprozessorsystem nach Anspruch 6,
wobei mindestens einige der mehreren Prozessoren (20) in einer Ringtopologie über einen gemeinsam genutzten Speicher (102) miteinander verbunden sind und Daten zwischen den Prozessoren (20), die in der Ringtopologie über den gemeinsam genutzten Speicher (102) verbunden sind, gesendet und empfangen werden.

9. Datenverarbeitungsverfahren, das durch ein System (1) ausgeführt wird, das mehrere Prozessoren (20) umfasst und einen Controller (10) zum Steuern von Operationen jedes der mehreren Prozessoren (20) umfasst, wobei jeder der Prozessoren (20) eine Datenverarbeitung durchführt,
**dadurch gekennzeichnet, dass**
das Verfahren die Schritte umfasst, dass:

durch den Controller (10) Datenverarbeitungsergebnisse in einer vorbestimmten Reihenfolge von den Prozessoren (20) erhalten werden, die die Datenverarbeitung beendigt haben, um Rundsendungsdaten zu erzeugen und um die Rundsendungsdaten an die mehreren Prozessoren (20) rundzusenden, wobei die Rundsendungsdaten die erhaltenen Verarbeitungsergebnisse und die Identifikationsdaten zum Identifizieren des sendenden Prozessors (20) umfassen;

durch mindestens einen der mehreren Prozessoren (20) eine Datenverarbeitung nach einem Auswählen nur jener Verarbeitungsergebnisse, die gemäß den in den Rundsendungsdaten umfassten Identifikationsdaten spezifiziert sind, aus den von dem Controller (10) empfangenen Rundsendungsdaten durchgeführt wird, um das Verarbeitungsergebnis zusammen mit den Identifikationsdaten, die ihn selbst angeben, an den Controller (10) zu senden;

jedem der mehreren Prozessoren (20) Identifikationsdaten, um sie selbst zu identifizieren, zugeordnet werden;

der Controller (10) angepasst wird, um die Rundsendungsdaten zu erzeugen und rundzusenden, wobei die Rundsendungsdaten zusätzlich zu den Ergebnissen der Verarbeitung die Identifikationsdaten des sendenden Prozessors (20) umfassen;

durch die mehreren Prozessoren (20) das Ergebnis/die Ergebnisse der Verarbeitung, das/die für die Datenverarbeitung notwendig ist/ sind, die sie im nachfolgenden Zeitablauf durchführen, auf der Grundlage der Identifikationsdaten, die in den empfangenen Rundsendungsdaten umfasst sind, aussortiert wird/ werden; und

durch einen Sortierungsmechanismus (30) die Identifikationsdaten von den Prozessoren (20) unter den mehreren Prozessoren (20), die die Datenverarbeitung abgeschlossen haben, erhalten werden, und die erhaltenen Identifikationsdaten durch den Sortierungsmechanismus (30) in einer vorbestimmten Reihenfolge an den Controller (10) gesendet werden; und

der Controller (10) ausgestaltet wird, um die Ergebnisse der Verarbeitung auf der Grundlage der Identifikationsdaten, die von dem Sortierungsmechanismus (30) empfangen werden, zu erhalten.

**Revendications**

1. Système multiprocesseur (1) comprenant :

une pluralité de processeurs (20) qui effectuent du traitement de données ; et
un régisseur (10) apte à diffuser à ladite pluralité de processeurs (20) des données de diffusion, les données de diffusion incluant les données utilisées en traitement de données ;
**caractérisé :**

**en ce que** chacun de ladite pluralité de processeurs (20) est apte à effectuer un traitement de données après tri, parmi lesdites données de diffusion diffusées par ledit régisseur (10), de seulement les données nécessaires pour le traitement de données qu'il effectue ;
**en ce que** ledit régisseur (10) est apte à obtenir un résultat de traitement du processeur (20) qui a fini un traitement de données, et à diffuser à tous les processeurs (20), en tant que lesdites données de traitement, les résultats de traitement obtenus ;
**en ce que** des données d'identification destinées à l'identifier sont affectées à chacun de ladite pluralité de processeurs (20) ;
**en ce que** ledit régisseur (10) est apte à engendrer et à diffuser les données de diffusion, les données de diffusion incluant les données d'identification des processeurs émetteurs (20) en plus desdits résultats du traitement ;
**en ce que** les processeurs de ladite pluralité de processeurs (20) sont aptes à trier le ou les résultats de traitement nécessaires pour le traitement de données qu'ils effectuent au cadencement suivant, en se basant sur lesdites données d'identification incluses dans les données de diffusion reçues ; et
**en ce que** ledit système multiprocesseur comprend en outre un mécanisme (30) de tri qui est apte à obtenir les données d'identification provenant du processeur (20) qui a fini le traitement de données parmi ladite pluralité de processeurs (20) et à envoyer les données d'identification obtenues audit régisseur (10) dans un ordre prédéterminé,

dans lequel ledit régisseur (10) est constitué pour obtenir lesdits résultats de traitement en se basant sur les données d'identification reçues dudit mécanisme (30) de tri.

2. Système multiprocesseur selon la revendication 1, comprenant en outre un moyen destiné à engendrer des données de priorité, les données de priorité étant utilisées par ledit régisseur (10) pour déterminer un ordre de lecture desdits résultats de traitement,

dans lequel le processeur (20) qui a fini le traitement de données envoie, audit mécanisme (30) de tri, lesdites données de priorité au sujet du traitement conjointement avec ses propres données d'identification, et

dans lequel ledit mécanisme (30) de tri est constitué pour déterminer, en se basant sur lesdites données de priorité, un ordre d'envoi desdites données d'identification.

3. Système multiprocesseur selon la revendication 2, dans lequel ledit mécanisme (30) de tri comprend des registres (301, 302, 306) en nombre égal à celui desdits processeurs (20) ;

un moyen (301, 302) destiné à enregistrer, dans lesdits registres associés aux processeurs émetteurs (20), lesdites données de priorité et lesdites données d'identification qui ont été envoyées par les processeurs émetteurs (20) ; et

un comparateur (304) destiné à comparer lesdites données de priorité pour déterminer l'ordre des données d'identification enregistrées dans les registres (301, 302) respectifs,

ledit mécanisme (30) de tri étant constitué pour déterminer, en se basant sur le résultat de comparaison obtenu par ledit comparateur (304), un ordre d'envoi desdites données d'identification.

4. Système multiprocesseur selon la revendication 1, dans lequel ledit régisseur (10) comprend une mémoire (102) destinée à mémoriser des données, un moyen (101) de commande de mémorisation destiné à obtenir ledit ou lesdits résultats de traitement provenant du processeur (20) qui est spécifié par les données d'identification qui ont été reçues dudit mécanisme (30) de tri pour mémoriser le ou les résultats obtenus dans ladite mémoire (102) ; et

un moyen (101) générateur de données qui lit ledit ou lesdits résultats de traitement mémorisés dans ladite mémoire (102) et qui engendre lesdites données de diffusion, les données de diffusion incluant ledit ou lesdits résultats de traitement et les données d'identification reçues.

5. Système multiprocesseur selon la revendication 1, dans lequel chaque processeur (20) comprend un mécanisme (201) de traitement de données destiné à déterminer si les données nécessaires pour le traitement de données qu'il effectue sont incluses dans lesdites données de diffusion et à effectuer le traitement de données après tri de seulement lesdites données nécessaires s'il y en a;

un moyen destiné à envoyer audit régisseur (10) le résultat du traitement de données que ledit mécanisme (201) de traitement de données a fait, conjointement avec ses propres données d'identification, en réponse à une demande provenant dudit régisseur (10) ; et

un moyen destiné à envoyer, audit mécanisme (30) de tri, des données de notification de fin de traitement en réponse à l'achèvement du traitement de données, les données de notification de fin de traitement incluant ses propres données d'identification.

6. Système multiprocesseur selon la revendication 1, comprenant :

un circuit (30) de totalisation destiné à calculer la somme des résultats de traitement de données effectués par ladite pluralité de processeurs (20),

dans lequel chacun de ladite pluralité de processeurs (20) envoie un résultat de traitement audit circuit (30) de totalisation,

dans lequel ledit circuit (30) de totalisation calcule la somme des résultats de traitement envoyés par les processeurs (20) respectifs et envoie le résultat de calcul audit régisseur (10), et

dans lequel ledit régisseur (10) diffuse, à ladite pluralité de processeurs (20), la somme des résultats de traitement reçue dudit circuit (30) de totalisation.

7. Système multiprocesseur selon la revendication 1, dans lequel au moins certains de ladite pluralité de processeurs (20) sont connectés les uns aux autres en une topologie annulaire via une mémoire partagée (102) et dans lequel des données sont émises et reçues entre les processeurs (20) connectés dans la topologie annulaire par l'intermédiaire de ladite mémoire partagée (102).

8. Système multiprocesseur selon la revendication 6, dans lequel au moins certains de ladite pluralité de processeurs (20) sont connectés les uns aux autres en une topologie annulaire via une mémoire partagée (102) et dans lequel des données sont émises et reçues entre les processeurs (20) connectés dans la topologie annulaire par l'intermédiaire de ladite mémoire partagée (102).

9. Procédé de traitement de données qui est mis en oeuvre par un système (1) qui comprend une pluralité de processeurs (20) et qui comprend un régisseur (10) destiné à commander le fonctionnement de chacun de ladite pluralité de processeurs (20), chacun des processeurs (20) effectuant du traitement de données,
**caractérisé en ce que** ledit procédé comprend les étapes consistant:

à obtenir, par ledit régisseur (10), des résultats de traitement de données dans un ordre prédéterminé en provenance des processeurs (20) qui ont achevé le traitement de données pour engendrer des données de diffusion et pour diffuser les données de diffusion à ladite pluralité de processeurs (20), les données de diffusion incluant les résultats de traitement obtenus et les données d'identification destinées à identifier les processeurs émetteurs (20) ;

à effectuer, par au moins l'un de la pluralité de processeurs (20), un traitement de données après sélection de seulement les résultats de traitement spécifiés en fonction des données d'identification incluses dans les données de diffusion, parmi les données de diffusion reçues du régisseur (10) pour envoi, audit régisseur (10), du résultat de traitement conjointement avec les données d'identification le désignant lui-même ;

à affecter à chacun de ladite pluralité de processeurs (20) des données d'identification destinées à les identifier ;

à adapter ledit régisseur (10) pour à engendrer et diffuser les données de diffusion, les données de diffusion incluant les données d'identification des processeurs émetteurs (20) en plus desdits résultats du traitement ;

à trier, par ladite pluralité de processeurs (20), le ou les résultats de traitement nécessaires pour le traitement de données qu'ils effectuent au cadencement suivant, en se basant sur lesdites données d'identification incluses dans les données de diffusion reçues ; et

à obtenir, par un mécanisme (30) de tri, les données d'identification provenant du processeur (20) qui a fini le traitement de données parmi ladite pluralité de processeurs (20) et à envoyer, par ledit mécanisme (30) de tri, les données d'identification obtenues audit régisseur (10) dans un ordre prédéterminé ; et

à configurer ledit régisseur (10) pour obtenir lesdits résultats de traitement en se basant sur les données d'identification reçues dudit mécanisme (30) de tri.

1

FIG. 1

10

CELL PROCESSOR

| 102 | 101 | 103 |
|---|---|---|
| MAIN MEMORY | CPU CORE | DMAC |

B1

EXTERNAL MEMORY                    WTA/SUM CIRCUIT

FIG. 2

20

201                                    202

CELL CPU                    INPUT BUFFER ◄── BCMC

                           203

                    206    OUTPUT BUFFER ──► BCMC

              INSTRUCTION   204
              MEMORY

DATA                       WTA/BUFFER ──► WTA/BUFFER
MEMORY                                    CIRCUIT

207

SHARED MEMORY    PROGRAM ◄─────────────── BCMC
                 CONTROLLER

                 205

FIG. 3

30

PREVIOUS STAGE OR
CELL PROCESSOR

PREVIOUS STAGE OR
CELL PROCESSOR

301

302

INPUT REGISTER A

| INTEGER A | FLOATING-POINT A |

INPUT REGISTER B

| INTEGER B | FLOATING-POINT B |

SELECTOR
SWITCH

303

COMPARATOR

304

ADDER

305

| INTEGER | FLOATING-POINT |

OUTPUT REGISTER

306

NEXT STAGE OR BCMC

FIG. 4

BCMC | CELL PROCESSOR | WTA/SUM CIRCUIT

START

S101

GENERATE
BROADCAST DATA

S102

BROADCAST DATA

S103

DETERMINE
WHETHER THERE IS
NECESSARY STATE
VARIABLE VALUE

NO

END

S104    YES

OVERWRITE
DATA MEMORY WITH
STATE VARIABLE VALUE

S105

DATA PROCESSING

S106

REPORT END OF
PROCESSING

S107

SEND ID DATA TO BCMC
IN ORDER OF PRIORITY

S108

UPDATE STATUS
VARIABLE VALUE

END

FIG. 5

FIG. 6

FIG. 7

FIG. 8

PROCESSOR A

PROCESSOR B

PROCESSOR C

PROCESSOR D

PROCESSOR E

FIG. 9

BCMC          CELL PROCESSOR         WTA/SUM CIRCUIT

START

S201

GENERATE/BROADCAST
BROADCAST DATA

S202

CALCULATE NEW
POSITION DATA
AND BOUNDING BOX

S203

UPDATE
POSITION DATA

S204

BROADCAST
OBJECT DATA

S205

IS THERE
POSSIBILITY OF
COLLISION ?

N

Y   S206

CALCULATE DISTANCE

S207

COLLISION ?

N

Y   S208

GENERATE COLLISION
DATA

S210

SEND -1.0 TO
WTA/SUM CIRCUIT

S209

SEND COLLISION
STRENGTH DATA TO
WTA/SUM CIRCUIT

S211

DETECT MAXIMUM
VALUE

S212

OBTAIN COLLISION DATA

END

FIG. 10

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0411497 A2